# EUROPÄISCHE PATENTANMELDUNG

(11) **EP 2 247 169 A1**
(43) Veröffentlichungstag der Anmeldung: **03.11.2010**
(21) Anmeldenummer: 10158980.2
(22) Anmeldetag: 01.04.2010
(51) Int. Cl.: H05B 41/288

(54) **Verfahren und elektronisches Vorschaltgerät zum Betreiben einer Hochdruckentladungslampe**

(30) Priorität: 28.04.2009 DE 102009019156
(71) Anmelder: Osram Gesellschaft mit Beschränkter Haftung, 81543 München (DE)
(72) Erfinder: Lichtenberg, Stefan, 14612 Falkensee (DE); Mühlschlegel, Joachim, 82194 Gröbenzell (DE)

(57) **Zusammenfassung**

Die vorliegende Erfindung betrifft ein Verfahren zum Betreiben einer Hochdruckentladungslampe mit einem Hochfrequenzsignal, wobei die Hochdruckentladungslampe mindestens eine erste (14a) und eine zweite Elektrode (14b) umfasst, wobei die erste (14a) und die zweite Elektrode (14b) derart angeordnet sind, dass sich die Elektrodenspitzen (18a, 18b) gegenüberliegen, wobei im Bereich der Elektrodenspitzen (18a, 18b) jeweils eine Wendel (16a, 16b) angeordnet ist, wobei die Hochdruckentladungslampe vor ihrem stationären Betrieb in einer Startphase folgende Phasen durchläuft: eine Verzögerungsphase, eine Durchbruchphase, eine Elektrodenheizphase und eine Brennerheizphase, wobei nach Abschluss der Elektrodenheizphase die erste (14a) und die zweite Elektrode (14b) innerhalb zumindest einer vorgebbaren Zeitdauer derart angesteuert werden, dass die Hochdruckentladungslampe mit einem Lampenstrom (I_{boost}) betrieben wird, der größer als der Nennlampenstrom (Iₙₑₙₙ) ist, umfassend folgenden Schritt: a) Betreiben der Hochdruckentladungslampe derart, dass sie innerhalb der zumindest einen vorgebbaren Zeitdauer eine momentane Lampenbrennspannung (U_{Bmom}) aufweist, die mindestens 40% der Nennlampenbrennspannung (U_{Bnenn}) im stationären Betrieb beträgt. Sie betrifft überdies ein entsprechendes elektronisches Vorschaltgerät zum Betreiben einer Hochdruckentladungslampe.

## Beschreibung

### Technisches Gebiet

Die vorliegende Erfindung betrifft ein Verfahren zum Betreiben einer Hochdruckentladungslampe mit einem Hochfrequenzsignal, wobei die Hochdruckentladungslampe mindestens eine erste und eine zweite Elektrode umfasst, wobei die erste und die zweite Elektrode derart angeordnet sind, dass sich die Elektrodenspitzen gegenüberliegen, wobei im Bereich der Elektrodenspitzen jeweils eine Wendel angeordnet ist, wobei die Hochdruckentladungslampe vor ihrem stationären Betrieb in einer Startphase folgende Phasen durchläuft: eine Verzögerungsphase, eine Durchbruchphase, eine Elektrodenheizphase und eine Brennerheizphase, wobei nach Abschluss der Elektrodenheizphase die erste und die zweite Elektrode innerhalb zumindest einer vorgebbaren Zeitdauer derart angesteuert werden, dass die Hochdruckentladungslampe mit einem Lampenstrom betrieben wird, der größer als der Nennlampenstrom ist. Sie betrifft überdies ein elektronisches Vorschaltgerät zum Betreiben einer Hochdruckentladungslampe mit einem Hochfrequenzsignal, wobei das elektronische Vorschaltgerät eine Steuervorrichtung umfasst, die ausgelegt ist, die Hochdruckentladungslampe vor ihrem stationären Betrieb in einer Startphase in folgenden Phasen zu betreiben: eine Verzögerungsphase, eine Durchbruchphase, eine Elektrodenheizphase und eine Brennerheizphase, wobei die Steuervorrichtung weiterhin ausgelegt, nach Abschluss der Elektrodenheizphase die Hochdruckentladungslampe mit einem Lampenstrom zu betreiben, der größer als der Nennlampenstrom ist.

### Stand der Technik

Beim Hochfrequenzbetrieb von Hochdruckentladungslampen wurde ein Bogenansatz auf der Wendel der Elektroden oder sogar noch hinterhalb der Wendel beobachtet. Gewünscht ist jedoch, dass der Bogen von Elektrodenspitze zu Elektrodenspitze verläuft. Durch den Bogenansatz an nicht gewünschter Stelle verschleißen die Elektroden zu schnell, so dass die Lebensdauer der Hochdruckentladungslampe deutlich reduziert ist.

Wird eine Hochdruckentladungslampe mit einem Niederfrequenzsignal betrieben, tritt das Problem des unerwünschten Bogenansatzes auf der Wendel der Elektroden nicht auf. Dies hat seinen Grund darin, dass bei Niederfrequenzbetrieb die Zeitdauer, in der Strom von der einen zur anderen Elektrode fließt, lang genug ist, um die entsprechende Elektrode durchgängig aufzuheizen. Dadurch wird der Bogen wie gewünscht auf die Elektrodenspitze gezogen.

Der Niederfrequenzbetrieb hat jedoch den Nachteil, dass die Realisierung aufwendiger ist und das entsprechende elektronische Vorschaltgerät unerwünscht hohe Verluste aufweist.

Aus der US 2003/0127993 ist ein gattungsgemäßes Verfahren zum Betreiben einer Hochdruckentladungslampe bekannt. Gemäß der Lehre der genannten Druckschrift wird die Hochdruckentladungslampe mit einem Hochfrequenzsignal betrieben, wobei zur Vermeidung eines Bogenansatzes auf der Wendel, dort mit Back-Arcing bezeichnet, der Hochdruckentladungslampe während der gesamten Zeitdauer der Brennerheizphase (arc tube heating) ein Lampenstrom eingeprägt wird, der mindestens 85 % des Maximalstroms ausmacht. Wie der Fig. 3 der genannten Druckschrift entnommen werden kann, beträgt zu Beginn dieser Brennerheizphase die Lampenbrennspannung etwa 10 bis 20 % der Nennlampenbrennspannung im stationären Betrieb, das heißt der im Lampendatenblatt angegebenen typischen Brennspannung, und zum Ende etwa 100 % der Nennlampenbrennspannung im stationären Betrieb. Verfährt man nach dieser Lehre, stellt man zwei Nachteile fest: Zum einen wird der Lampenkolben von innen geschwärzt, wodurch weniger Licht abgestrahlt werden kann, zum anderen findet ein Materialabtrag bzw. eine Materialverdampfung an den Lampenelektroden statt, was zu einer Verkürzung der Lampenlebensdauer führt.

### Darstellung der Erfindung

Die Aufgabe der vorliegenden Erfindung besteht deshalb darin, das eingangs genannte Verfahren beziehungsweise das eingangs genannte elektronische Vorschaltgerät derart weiterzubilden, dass einerseits ein Ansetzen des Bogens auf oder hinter mindestens einer der Wendeln zuverlässig verhindert werden kann, zum anderen keine Schwärzung des Lampenkolbens auftritt.

Diese Aufgabe wird gelöst durch ein Verfahren mit den Merkmalen von Patentanspruch 1 sowie durch ein elektronisches Vorschaltgerät mit den Merkmalen von Patentanspruch 10.

Die vorliegende Erfindung basiert auf der Erkenntnis, dass die Schwärzung des Lampenkolbens seine Ursache darin hat, dass im Stand der Technik die Hochstromphase, das heißt die Phase des Betriebs der Hochdruckentladungslampe mit einem Lampenstrom, der größer als der Nennlampenstrom ist, bereits zu einem Zeitpunkt vorgenommen wird, zu dem der Innendruck der Hochdruckentladungslampe noch zu gering ist. Der Innendruck der Hochdruckentladungslampe ist mit der momentanen Lampenbrennspannung korreliert. Mit Bezug auf Fig. 3 der US 2003/0127993 A1 ist es deshalb falsch, die Hochdruckentladungslampe bereits zu Beginn der Brennerheizphase mit einem Lampenstrom zu betreiben, der größer als der Nennlampenstrom ist. Zu diesem Zeitpunkt ist die Lampenbrennspannung noch zu gering, ca. 10 bis 20 % der Nennlampenbrennspannung im stationären Betrieb, wodurch der Lampeninnendruck nicht hoch genug ist, um eine Abdampfung von Wolfram von den Elektroden zu verhindern. Dies führt dann zu den unerwünschten Effekten einer Schwärzung des Lampenkolbens sowie eines Abschmelzens der Elektroden.

Wenn nun die Hochstromphase zu einem Zeitpunkt eingesetzt wird, bei dem bereits ein erheblicher Teil der Füllung, insbesondere Quecksilber und MH-Füllung, verdampft wurde, dann wirkt der hohe Druck in der Lampe als Diffusionssperre, so dass sich verdampftes oder abgesputtertes Wolfram von der Elektrode nicht an der Wand niederschlagen kann. Dies ist der Fall, wenn die Hochstromphase zu Zeitpunkten ausgeführt wird, bei denen die momentane Lampenbrennspannung mindestens 40 % der Nennlampenbrennspannung im stationären Betrieb beträgt.

Bei einer bevorzugten Weiterbildung beträgt die vorgebbare Zeitdauer 0,1 bis 30 s, insbesondere 0,1 bis 5 s, wenn die momentane Lampenbrennspannung größer 60 % der Nennlampenbrennspannung ist, und insbesondere 0,2 bis 30 s, wenn die momentane Lampenbrennspannung zwischen 40 und 60 % der Nennlampenbrennspannung beträgt.

Während aus der US 2003/0127993 A1 bekannt ist, die Hochstromphase in die Brennerheizphase zu legen, allerdings ungünstigerweise während der gesamten Brennerheizphase, so kann erfindungsgemäß vorgesehen sein, die Hochstromphase - gemäß den erfindungsgemäßen Kriterien - während der Brennerheizphase stattfinden zu lassen, noch bevorzugter während des stationären Betriebs der Hochdruckentladungslampe. Dort wird ein Wechsel des Ansatzes des Bogens von der Wendel auf die Elektrodenspitze bei minimaler Stromüberhöhung und/oder bei kürzest möglicher Zeitdauer erzielt. Dadurch, dass der hohe Strom nur kurzzeitig zur Verfügung gestellt werden muss, wird das elektronische Vorschaltgerät, mit dem die Hochdruckentladungslampe betrieben wird, geschont, ebenso dadurch, dass bereits eine kleine Überhöhung ausreicht, da zu diesem Zeitpunkt in der Hochdruckentladungslampe bereits ein beachtlicher Innendruck aufgebaut wurde.

Bevorzugt gilt für den Lampenstrom während der mindestens einen vorgebbaren Zeitdauer: 1,2 <= I_{boost} / ^{I}nenn <= 3,5, insbesondere 1,6 <= I_{boost} / Iₙₑₙₙ <= 2,5, wobei I_{boost} den Lampenstrom während der vorgebbaren Zeitdauer und Iₙₑₙₙ den Nennlampenstrom darstellt. Mit Bezug auf die obigen Ausführungen bewegt sich demnach der Lampenstrom I_{boost}, falls die mindestens eine vorgebbare Zeitdauer während des stationären Betriebs stattfindet, bevorzugt an der Untergrenze der angegebenen Strombereiche.

Bei einer besonders bevorzugten Weiterbildung wird nach Schritt a) geprüft, ob der Bogen von der Spitze der ersten Elektrode zur Spitze der zweiten Elektrode verläuft, wobei, falls dies nicht der Fall ist, Schritt a) mindestens einmal wiederholt wird. Dies eröffnet die Möglichkeit, in einem ersten Versuch einen Wechsel des Ansatzes des Bogens von der Wendel zur Elektrodenspitze mit Betriebsparametern zu versuchen, das heißt insbesondere den Lampenstrom während der vorgebbaren Zeitdauer und die Länge der Zeitdauer selbst so zu wählen, dass sie für das elektronische Vorschaltgerät und/oder die Hochdruckentladungslampe möglicht wenig belastend sind. Wurde das gewünschte Ziel nicht erreicht, so kann Schritt a) wiederholt werden, wobei nunmehr zu belastenderen Werten mindestens eines der beiden Parameter gewechselt wird, um das Ziel nunmehr mit größerer Sicherheit zu erreichen.

Bevorzugt wird bei einer Wiederholung von Schritt a) der Lampenstrom I_{boost} gegenüber dem vorherigen Schritt a) um 0,1 * I_{boost} bis 1,0 * I_{boost} erhöht. Weiterhin ist bevorzugt, wenn bei einer Wiederholung von Schritt a), das heißt mit dem ursprünglichen Lampenstrom I_{boost} oder mit Bezug auf die vorherigen Ausführungen bereits mit einem erhöhten Lampenstrom I_{boost}, die vorgebbare Zeitdauer gegenüber dem vorherigen Schritt a) um 20 % bis 200 % erhöht wird. Die Erhöhung des Lampenstroms beziehungsweise die Erhöhung der vorgebbaren Zeitdauer kann schrittweise erfolgen, wobei die Erhöhung des Lampenstroms unabhängig von der Erhöhung der Zeitdauer oder gleichzeitig erfolgen kann.

Bevorzugt wird zur Feststellung, ob der Bogen von der Spitze der ersten Elektrode zur Spitze der zweiten Elektrode verläuft, die Lampenbrennspannung ausgewertet. Liegt die momentan gemessene Lampenbrennspannung zwischen 5 und 10 % über der erwarteten Lampenbrennspannung, so ist davon auszugehen, dass der Bogen noch nicht von der Spitze der ersten Elektrode zur Spitze der zweiten Elektrode verläuft.

Weitere vorteilhafte Ausführungsformen ergeben sich aus den Unteransprüchen. Die mit Bezug auf das erfindungsgemäße Verfahren beschriebenen bevorzugten Ausführungsformen und deren Vorteile gelten entsprechend, soweit anwendbar, für das erfindungsgemäße elektronische Vorschaltgerät. Dabei ist die Steuervorrichtung ausgelegt, die entsprechenden Verfahrensschritte durchzuführen.

### Kurze Beschreibung der Zeichnung(en)

Im Nachfolgenden wird nunmehr ein Ausführungsbeispiel eines erfindungsgemäßen Verfahrens unter Bezugnahme auf die beigefügten Zeichnungen näher beschrieben. Es zeigen:
- Fig. 1: in schematischer Darstellung den Kolben einer Hochdruckentladungslampe, bei der der Bogenansatz bei der linken Elektrode nicht auf der Elektroden- spitze liegt; und
- Fig. 2: in schematischer Darstellung den zeitlichen Ver- lauf der momentanen Lampenbrennspannung U_{Bmom} über der Zeit.

### Bevorzugte Ausführung der Erfindung

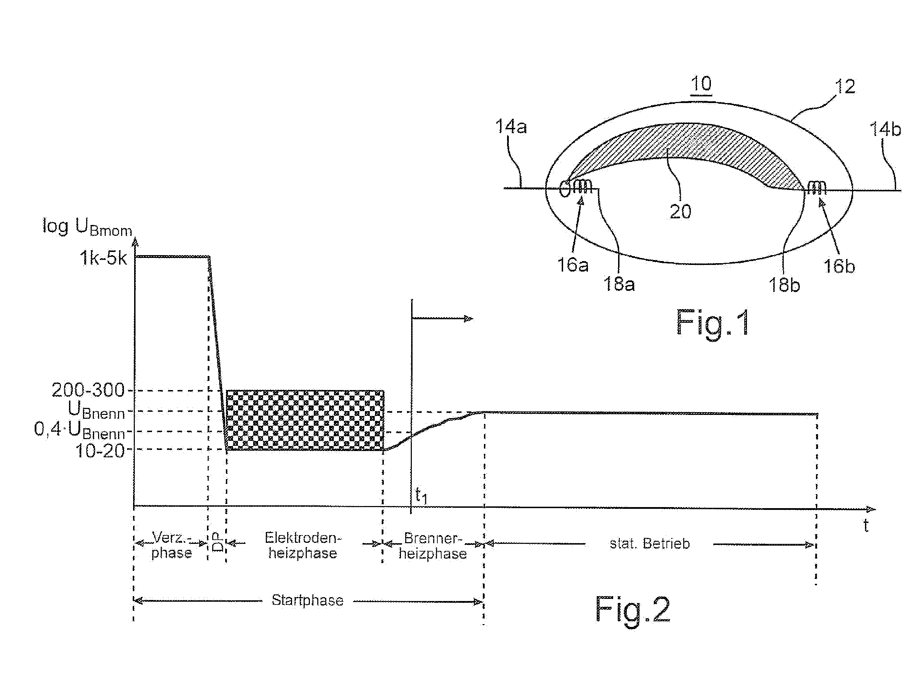

Fig. 1 zeigt den Kolben 10 einer Hochdruckentladungslampe. Dieser umfasst ein transparentes Glasgehäuse 12 sowie eine erste 14a und zweite Elektrode 14b. Am Ende einer jeden Elektrode 14a, 14b ist eine Wendel angeordnet, so auf der Elektrode 14a die Wendel 16a und auf der Elektrode 14b die Wendel 16b. Die Elektrodenspitzen sind mit 18a beziehungsweise 18b bezeichnet.

Eingezeichnet ist überdies ein Bogen 20, der infolge der Konvektion nach oben durchgebogen ist. Wie gut zu erkennen ist, setzt der Bogen im Bereich der linken Elektrode 14a, nicht auf der Elektrodenspitze 18a an, sondern hinter der Wendel 16a. Gewünscht ist jedoch, dass sich der Bogen 20 zwischen der Elektrodenspitze 18a und der Elektrodenspitze 18b erstreckt.

Fig. 2 zeigt den zeitlichen Verlauf der momentanen Brennspannung U_{Bmom}, wobei die momentane Brennspannung U_{Bmom} logarithmisch aufgetragen ist, um eine gute Erkennbarkeit der relevanten Bereiche zu ermöglichen. Während einer Verzögerungsphase beträgt die momentane Lampenbrennspannung U_{Bmom} zwischen 1 kV und 5 kV. Diese bricht während einer Durchbruchphase DP auf Werte zwischen 10 und 20 V zusammen. Daran schließt sich eine Elektrodenheizphase an, bei der die Lampenbrennspannung bis zu 200 oder sogar 300 V steigen kann. Während der gesamten Elektrodenheizphase, wie durch den punktierten Spannungsbereich in Fig. 2 verdeutlicht, kann die momentane Brennspannung U_{B}-ₘₒₘ zwischen 10 und 300 V hin- und herspringen.

An die Elektrodenheizphase schließt sich die Brennerheizphase an. Der Beginn der Brennerheizphase ist dadurch definiert, dass ein stabiler Bogen 20 zwischen der ersten 16a und der zweiten Elektrode 16b entstanden ist. Nach der Brennerheizphase steigt die momentane Lampenbrennspannung U_{Bmom} von 10 bis 20 V auf die Nennlampenbrennspannung im stationären Betrieb, die der im Lampendatenblatt angegebenen typischen Brennspannung der Lampe entspricht.

Eingetragen ist ein Bereich, der zum Zeitpunkt t₁ beginnt, wobei dieser Zeitpunkt dadurch gekennzeichnet ist, dass dort die momentane Lampenbrennspannung U_{Bmom} 40 % der Nennlampenbrennspannung U_{Bnenn} im stationären Betrieb beträgt. Wie durch den Pfeil zum Zeitpunkt t₁ gekennzeichnet, darf die Hochdruckentladungslampe erst zu diesem Zeitpunkt zumindest während einer vorgebbaren Zeitdauer mit einem Lampenstrom betrieben werden, der größer als der Nennlampenstrom ist. Durch diese Maßnahme wird zum einen erreicht, dass sich der Bogen 20 von der Elektrodenspitze 18a zu der Elektrodenspitze 18b erstreckt, während andererseits eine Schwärzung des Lampenkolbens 10 sowie ein Abschmelzen der Elektroden 14a, 14b zuverlässig verhindert wird.

Wie aus Fig. 2 deutlich zu erkennen, kann die vorgebbare Zeitdauer während der Brennerheizphase oder während des stationären Betriebs stattfinden.

In dieser Phase gilt für den Lampenstrom: : 1,2 <= I_{boost} / Iₙₑₙₙ <= 3,5, insbesondere 1,6 <= I_{boost} / Iₙₑₙₙ <= 2,5, wobei I_{boost} den Lampenstrom während der vorgebbaren Zeitdauer und Iₙₑₙₙ den Nennlampenstrom darstellt. Die vorgebbare Zeitdauer beträgt insbesondere 0,1 bis 30 s, insbesondere 0,1 bis 5 s, wenn die momentane Lampenbrennspannung größer als 60 % der Nennlampenbrennspannung ist, und insbesondere 0,2 bis 30 s, wenn die momentane Lampenbrennspannung zwischen 40 und 60 % der Nennlampenbrennspannung beträgt.

Sollte sich nach der erstmaligen Anwendung einer Hochstromphase der Bogen noch immer nicht von der Elektrodenspitze 18a zu der Elektrodenspitze 18b erstrecken, was durch die Auswertung der Lampenbrennspannung überprüft werden kann, so können sich eine oder mehrere weitere Hochstromphasen anschließen. Innerhalb dieser weiteren Hochstromphasen kann der Lampenstrom I_{boost} und/oder die vorgebbare Zeitdauer erhöht werden.

## Patentansprüche

1. Verfahren zum Betreiben einer Hochdruckentladungslampe mit einem Hochfrequenzsignal, wobei die Hochdruckentladungslampe mindestens eine erste (14a) und eine zweite Elektrode (14b) umfasst, wobei die erste (14a) und die zweite Elektrode (14b) derart angeordnet sind, dass sich die Elektrodenspitzen (18a, 18b) gegenüberliegen, wobei im Bereich der Elektrodenspitzen (18a, 18b) jeweils eine Wendel (16a, 16b) angeordnet ist, wobei die Hochdruckentladungslampe vor ihrem stationären Betrieb in einer Startphase folgende Phasen durchläuft: eine Verzögerungsphase, eine Durchbruchphase, eine Elektrodenheizphase und eine Brennerheizphase,
wobei nach Abschluss der Elektrodenheizphase die erste (14a) und die zweite Elektrode (14b) innerhalb zumindest einer vorgebbaren Zeitdauer derart angesteuert werden, dass die Hochdruckentladungslampe mit einem Lampenstrom (I_{boost}) betrieben wird, der größer als der Nennlampenstrom (Iₙₑₙₙ) ist,
**gekennzeichnet durch** folgenden Schritt:
a) Betreiben der Hochdruckentladungslampe derart, dass sie innerhalb der zumindest einen vorgebbaren Zeitdauer eine momentane Lampenbrennspannung (U_{Bmom}) aufweist, die mindestens 40% der Nennlampenbrennspannung (U_{Bnenn}) im stationären Betrieb beträgt.

2. Verfahren nach Anspruch 1,
**dadurch gekennzeichnet,**
**dass** die vorgebbare Zeitdauer 0,1 bis 30s beträgt, insbesondere 0,1 bis 5s, wenn gilt: U_{Bmom} > 0,6 * U_{B-nenn},
wobei U_{Bmom} die momentane Lampenbrennspannung und U_{B-nenn} die Nennlampenbrennspannung ist, und insbesondere 0,2 bis 30s, wenn gilt: 0,4 * U_{Bnenn} <= U_{Bmom} <= 0,6 * U_{Bnenm}.

3. Verfahren nach Anspruch 1 oder 2,
**dadurch gekennzeichnet,**
**dass** die mindestens eine vorgebbare Zeitdauer während der Brennerheizphase stattfindet.

4. Verfahren nach einem der vorhergehenden Ansprüche,
**dadurch gekennzeichnet,**
**dass** die mindestens eine vorgebbare Zeitdauer während des stationären Betriebs stattfindet.

5. Verfahren nach einem der vorhergehenden Ansprüche,
**dadurch gekennzeichnet,**
**dass** für den Lampenstrom während der mindestens einen vorgebbaren Zeitdauer gilt:
1,2 <= I_{boost} / Iₙₑₙₙ <= 3,5, insbesondere 1,6 <= I_{boost} / Iₙₑₙₙ <= 2,5,
wobei I_{boost} den Lampenstrom während der vorgebbaren Zeitdauer und Iₙₑₙₙ den Nennlampenstrom darstellt.

6. Verfahren nach einem der vorhergehenden Ansprüche,
**dadurch gekennzeichnet,**
**dass** nach Schritt a) geprüft wird, ob der Bogen (20) von der Spitze ((18a) der ersten Elektrode (14a) zur Spitze (18b) der zweiten Elektrode (14b) verläuft, wobei, falls dies nicht der Fall ist, Schritt a) mindestens einmal wiederholt wird.

7. Verfahren nach Anspruch 6,
**dadurch gekennzeichnet,**
**dass** bei einer Wiederholung von Schritt a) der Lampenstrom (I_{boost}) gegenüber dem vorherigen Schritt a) um 0,1 * I_{boost} bis 1,0 * I_{boost} erhöht wird.

8. Verfahren nach einem der Ansprüche 6 oder 7,
**dadurch gekennzeichnet,**
**dass** bei einer Wiederholung von Schritt a) die vorgebbare Zeitdauer gegenüber dem vorherigen Schritt a) um 20% bis 200% erhöht wird.

9. Verfahren nach einem der Ansprüche 6 bis 8,
**dadurch gekennzeichnet,**
**dass** zur Feststellung, ob der Bogen (20) von der Spitze (18a) der ersten Elektrode (14a) zur Spitze (18b) der zweiten Elektrode (14b) verläuft, die Lampenbrennspannung (U_{Bmom}) ausgewertet wird.

10. Elektronisches Vorschaltgerät zum Betreiben einer Hochdruckentladungslampe mit einem Hochfrequenzsignal, wobei das elektronische Vorschaltgerät eine Steuervorrichtung umfasst, die ausgelegt ist, die Hochdruckentladungslampe vor ihrem stationären Betrieb in einer Startphase in folgenden Phasen zu betreiben: eine Verzögerungsphase, eine Durchbruchphase, eine Elektrodenheizphase und eine Brennerheizphase,
wobei die Steuervorrichtung weiterhin ausgelegt ist, nach Abschluss der Elektrodenheizphase die Hochdruckentladungslampe mit einem Lampenstrom (I_{boost}) zu betreiben, der größer als der Nennlampenstrom (Iₙₑₙₙ) ist,
**dadurch gekennzeichnet,**
**dass** die Steuervorrichtung weiterhin ausgelegt ist, die Hochdruckentladungslampe derart zu betreiben, dass sie innerhalb der zumindest einen vorgebbaren Zeitdauer eine momentane Lampenbrennspannung (U_{Bmom}) aufweist, die mindestens 40% der Nennlampenbrennspannung (U_{Bnenn}) im stationären Betrieb beträgt.
